# NEUE EUROPÄISCHE PATENTSCHRIFT

(11) **EP 0 926 210 B2**
(45) Veröffentlichungstag und Bekanntmachung des Hinweises auf die Entscheidung über den Einspruch: **21.07.2010**
(45) Hinweis auf die Patenterteilung: 06.03.2002
(21) Anmeldenummer: 98120679.0
(22) Anmeldetag: 05.11.1998
(51) Int. Cl.: C09C 1/30, C08F 292/00, C08K 9/08, G03G 9/08

(54) **Siliciumoxid, das an seiner Oberfläche teil- oder vollständig silylierte Polykieselsäureketten trägt**
Silicon oxide bearing on its surface partially or completely sylilated polysilicic acids chains
Oxyde de silicium portant en surface des chaînes d'acides polysiliciques partiellement ou complètement silylées

(30) Priorität: 19.12.1997 DE 19756831
(43) Veröffentlichungstag der Anmeldung: 30.06.1999
(73) Patentinhaber: Wacker Chemie AG, 81737 München (DE)
(72) Erfinder: Barthel, Herbert, Dr., 84547 Emmerting (DE); Heinemann, Mario, Dr., 84489 Burghausen (DE)
(74) Vertreter: Fritz, Helmut

(56) Entgegenhaltungen:
- EP-A- 0 342 025
- EP-A- 0 378 785
- EP-A- 0 460 665
- DE-A- 3 839 900
- DE-A- 4 240 741
- FR-A- 2 211 516
- FR-A- 2 635 782
- 'Schriftreihe Pigmente-Grundlagen von AEROSIL' FIRMENPROSPEKT DER FIRMA DEGUSSA NR 11 Juni 1993,

## Beschreibung

Die Erfindung betriftt Siliciumdioxid, das an seiner Oberfläche teil- oder vollständig silylierte Polykieselsäureketten trägt und ein Verfahren zu seiner Herstellung, sowie Toner und Siliconelastomere, die es enthalten.

In DE 1163784 und DE 3211431, DEGUSSA AG, werden Verfahren zur Hydrophobierung von Siliciumdioxid bei erhöhter Temperatur beschrieben. Das Siliciumdioxid wird hierzu bei hohen Temperaturen aktiviert und vorgetrocknet. Es wird ein hydrophobes Produkt erhalten.

In DE 4240741, Wacker-Chemie GmbH, wird ein Verfahren zur Silylierung von Siliciumdioxid mit Chlorsilanen unter Zusatz von niederen Alkylalkoholen beschrieben. Es wird ein gleichförmig hydrophobes Produkt erhalten.

In DE 2344388, Wacker-Chemie GmbH, wird ein Verfahren zur Hydrophobierung von Siliciumdioxid unter mechanischer Verdichtung beschrieben. Es wird ein vollständig hydrophobes Material erhalten.

In DE 2403783, BAYER AG, wird ein Verfahren zur Herstellung eines Siliciumdioxid-Füllstoffes zum Einsatz in Siliconmassen beschrieben. Es wird eine vollständig hydrophobe Kieselsäure erhalten.

In DE 3839900 und EP 0378785, Wacker-Chemie GmbH, wird ein Verfahren zur Hydrophobierung eines teilchenförmigen, Si-OH-Gruppen enthaltenden Feststoffes mit Hydrophobiermittel beschrieben. Es wird ein hydrophober Füllstoff erhalten, der zum Einsatz in härtbaren Massen auf Basis von Diorganopolysiloxan geeignet ist.

Nachteile des Standes der Technik sind im allgemeinen, daß mit diesem Verfahren eine homogene Hydrophobie der Materialien angestrebt und erzielt wird. Teil- oder vollständig silylierte Polykieselsäureketten auf einer Siliciumdioxidoberfläche werden dort nicht hergestellt.

Es bestand die Aufgabe, die Nachteile des Standes der Technik zu überwinden.

Gegenstand der Erfindung ist ein Siliciumdioxid nach Anspruch 1.

Die Hydrophobierung von Siliciumdioxid, insbesondere von pyrogenem Siliciumdioxid, wird gemäß dem Stand der Technik als die Umsetzung der Siliciumdioxid-Silanolgruppen mit Organosiliciumresten durchgeführt und beschrieben. Dies bedeutet gemäß dem Stand der Technik, daß die Hydrophobierung als Kondensationsreaktion der Siliciumdioxid-Silanolgruppen mit SiX-Gruppen (X ist eine reaktive Abgangsgruppe) eines Silyliermittels verläuft. In Konsequenz enthält ein hydrophobiertes Siliciumdioxid an seiner Oberfläche weniger Silanolgruppen als das hydrophile Ausgangs-Siliciumdioxid, das maximal zwei Silanolgruppen pro nm² der Siliciumdioxid-Oberfläche aufweist.

Das erfindungsgemäße Siliciumdioxid enthält an der Oberfläche chemisch gebundene teil- oder vollständig silylierte Polykieselsäuren. Die Silyliermittelschicht enthält also an der Siliciumdioxid-Oberfläche gebundene, teil- oder vollständig silylierte Polykieselsäurestrukturen aus Einheiten der Struktur

Rₐ(OH)_{b}SiO_{c} und (OH)_{d}SiOₑ,

wobei R gleich oder verschieden sein kann und vorzugsweise ein substituierter oder nicht substituierter Kohlenwasserstoffrest ist,
a 1, 2 oder 3, bevorzugt 3 ist,
sowie b 0, 1 oder 2, bevorzugt 0 ist,
und c 1, 2 oder 3, bevorzugt 1 ist,
wobei a + b + c gleich 4 ist,
d 0, 1, 2 oder 3, bevorzugt 0, 1 oder 2 ist,
e 1, 2, 3 oder 4 ist
und d + e gleich 4 ist.

R ist vorzugsweise gleich oder verschieden, ein Kohlenwasserstoff-Rest mit 1 bis 18 C-Atom(en), aliphatisch, gesättigt oder ungesättigt, oder aromatisch, substituiert oder nicht substituiert, bevorzugt mit Halogen oder Pseudohalogen substituiert.

Beispiele für R sind:
Alkylreste, wie der Methylrest, der Ethylrest; Propylreste, wie der iso- oder der n-Propylrest; Butylreste, wie der t- oder n-Butylrest; Pentylreste, wie der neo-, der iso- oder der n-Pentylrest; Hexylreste, wie der n-Hexylrest; Heptylreste, wie der n-Heptylrest; Octylreste, wie der 2-Ethyl-hexyl- oder der n-Octylrest; Decylreste, wie der n-Decylrest; Dodecylreste, wie der n-Dodecylrest; Hexadecylreste, wie der n-Hexadecylrest; Octadecylreste, wie der n-Octadecylrest;
Alkenylreste, wie der Vinyl-, der 2-Allyl- oder der 5-Hexenylrest;
Arylreste, wie der Phenyl-, der Biphenyl oder Naphthenylrest;
Alkylarylreste, wie Benzyl-, Ethylphenyl-, Toluyl- oder die Xylylreste;
halogenierte Alkylreste, wie der 3-Chlorpropyl-, der 3,3,3-Trifluorpropyl oder der Perfluorhexylethylrest;
halogenierte Arylreste, wie der Chlorphenyl- oder Chlorbenzylrest.

Bevorzugte Beispiele für R sind aus Gründen der technischen Verfügbarkeit der Methylrest, der Vinylrest und der 3,3,3-Trifluorpropylrest.

Bevorzugt zeigt das erfindungsgemäße Siliciumdioxid einen Gehalt an aktiven und sauren SiOH der SiO₂-Oberfläche des Siliciumdioxids von kleiner als 25 Mol%, bezogen auf den Gesamtgehalt an aktiven und sauren SiOH eines unbehandelten hydrophilen Siliciumdioxids.

Die an der Siliciumdioxid-Oberfläche chemisch gebundenen, teil- oder vollständig silylierten Polykieselsäurestrukturen enthalten vorzugsweise mindestens zwei und maximal 20 Si-Atome.

Der molare Anteil der an der Siliciumdioxid-Oberfläche gebundenen, teil- oder vollständig silylierten Polykieselsäurestrukturen aus Einheiten der Struktur

Rₐ(OH)_{b}SiO_{c}

in der gesamten Silyliermittelschicht ist kleiner oder gleich 75 Mol%, aber größer oder gleich 25 Mol%,
wobei R, a, b und c die oben angegebene Bedeutung haben.

Beispiele für silylierte Polykieselsäure-Reste auf der Siliciumdioxid-Oberfläche sind (hierbei soll Z für ein Silicium-Atom der Siliciumdioxid-Oberfläche stehen, wobei bevorzugt die Siliciumdioxid-Oberfläche nicht von einem einheitlichen, sondern von unterschiedlichen silylierten Polykieselsäure-Rest(en) belegt ist) :

Z-O-Si[OSiR₃]₃

Z-O-SiOH[CSiR₃]₂

Z-O-Si(OH)₂[OSiR₃]

{Z-O-}₂Si[OSiR₃]₂

{Z-O-}₂SiOH[OSiR₃]

Z-O-Si[OSiR₃]₂-O-Si[OSiR₃]₃

Z-O-SiOH[OSiR₃]-O-Si[OSiR₃]₃

Z-O-Si(OH)₂-O-Si[OSiR₃]₃

Z-O-Si[OSiR₃]₂-O-SiOH[OSiR₃]₂

Z-O-Si[OSiR₃]₂-O-Si(OH)₂[OSiR₃]

Z-O-SiOH[OSiR₃]-O-SiOH[OSiR₃]₂

Z-O-Si{OSi[OSiR₃]₃}₃

Z-O-SiOH{OSi[OSiR₃]₃}₂

Z-O-Si{OSiOH[OSiR₃]₂}₃,

R gleich oder verschieden ist und die oben angegebene Bedeutung hat.

Bevorzugte Beispiele sind:

Z-O-Si [OSi (CH₃)₃]₃

Z-O-SiOH [OSi (CH₃)₃]₂

Z-O-Si(OH)₂[OSi(CH₃)₃]

{Z-O-}₂Si[OSi(CH₃)₃]₂

{Z-O-}₂SiOH[OSi(CH₃)₃]

Z-O-Si[OSi(CH₃)₃]₂-O-Si[OSi (CH₃)₃]₃

Z-O-SiOH[OSi(CH₃)₃]-O-Si[OSi(CH₃)₃]₃

Z-O-Si(OH)₂-O-Si[OSi(CH₃)₃]₃

Z-O-Si [OSi(CH₃)₃]₂-O-SiOH[OSi(CH₃)₃]₂

Z-O-Si[OSi(CH₃)₃]₂-O-Si(OH)₂[OSi(CH₃)₃]

Z-O-SiOH[OSi(CH₃)₃]-O-SiOH[OSi(CH₃)₃]₂

Z-O-Si{OSi[OSi(CH₃)₃]₃}₃

Z-O-SiOH{OSi[OSi(CH₃)₃]₃}₂

Z-O-Si{OSi[OSiOH(CH₃)₃]₂}₃

Ein weiterer Gegenstand der Erfindung ist ein Verfahren zur Herstellung von Siliciumdioxid, das an seiner Oberfläche teil- oder vollständig silylierte Polykieselsäureketten trägt, dadurch gekennzeichnet, daß das Silyliermittel im molaren Überschuß, bezogen auf die vorhandenen Silanolgruppen des Siliciumdioxids, zugegeben wird.

Bei den im erfindungsgemäßen Verfahren verwendeten Siliciumdioxiden handelt es sich vorzugsweise um Siliciumdioxide, wie z.B. durch naßchemische Fällung hergestelltes Siliciumdioxid, oder besonders bevorzugt pyrogen durch Flammenhydrolyse, z.B. von Tetrachlorsilan oder Methyltrichlorsilan oder Methyldichlorsilan, hergestelltes pyrogenes Siliciumdioxid. Die bevorzugt verwendeten Siliciumdioxide weisen einen hydrodynamischen Durchmesser der Siliciumdioxid-Aggregate von kleiner als 10 µm, bevorzugt kleiner als 1 µm auf, insbesondere im Größenbereich 100 bis 1000 nm; bevorzugt kommen solche mit einer spezifischen Oberfläche größer als 0,1 m²/g, besonders bevorzugt von 20 m²/g bis 400 m²/g (gemessen nach der BET-Methode nach DIN 66131 und 66132) zum Einsatz. Es können hydrophile und hydrophobe Siliciumdioxide eingesetzt werden.

Bei den im erfindungsgemäßen Verfahren verwendeten Silyliermitteln handelt es sich vorzugsweise um Organosiliciumverbindungen der Struktur

R_{f}SiX_{g},

wobei f 1, 2 oder 3, bevorzugt 3,
g 1, 2, oder 3
und f + g gleich 4 ist,
X eine reaktive Gruppe oder eine hydrolysierbare Gruppe am Siliciumatom ist, wie ein Halogenatom, wie -Cl, eine Pseudohalogengruppe, wie -CN, -NCO, -NCS oder -N₃, eine Alkoxygruppe oder Aminogruppe. Vorzugsweise ist X eine Alkoxygruppe mit 1 bis 8 C-Atom(en), wie O-Methyl, O-Ethyl, O-Propyl, O-Butyl, bevorzugt O-Methyl oder O-Ethyl,
oder

[RₕSi]ᵢY,

wobei h 3,
i 1 oder 2
und Y O oder NR¹₃₋ᵢ, bevorzugt NH ist, wobei R¹ Wasserstoff oder Alkylrest mit 1-8 Kohlenstoffatom(en) bedeutet, oder oligomere oder polymere Organosiliciumverbindungen aufgebaut aus Einheiten der Struktur

[RⱼSiY],

wobei j 1, 2 oder 3, bevorzugt 2 ist
und Y die obige Bedeutung hat, bevorzugt O,
wobei diese Organosiliciumverbindungen eine Viskosität bis 100 mPas aufweisen und bevorzugt zusätzlich eine OH-Gruppe enthalten, besonders bevorzugt 2 OH-Gruppen und mehr und
R die obige Bedeutung hat.

Bevorzugte Beispiele für Silyliermittel sind Trimethylmethoxysilan, Trimethylethoxysilan, Hexamethyldisilazan, Bis-(Vinyldimethyl)-Disilazan oder Bis-(3,3,3-Trifluorpropyl-dimethyl)-Disilazan.

Bevorzugt werden Mischungen aus Silyliermitteln und sauerstoffhaltigen, siliciumorganischen Verbindungen eingesetzt. Bevorzugt sind solche sauerstoffhaltige, siliciumorganische Verbindungen, die selbst einer Silylierung nur mit einem molaren Anteil von kleiner als 25% ausgesetzt werden. Beispiele solcher sauerstoffhaltigen, siliciumorganischen Verbindungen sind dimere, oligomere oder polymere Polydimethylsiloxane der Formel (CH₃)₃SiO-[(CH₃)₂SiO]ₓSiCH₃ oder [(CH₃)₂SiO]ₓ mit x < 100, bevorzugt x < 10.

Eine besonders bevorzugte Mischung von Silyliermittel mit sauerstoffhaltigen, siliciumorganischen Verbindungen besteht aus Hexamethyldisilazan und Hexamethyldisiloxan.

Vorzugsweise können Zusatzstoffe bei der Silylierung enthalten sein, wie Wasser und vorzugsweise Basen, wie anorganische Basen, z.B. Ammoniak oder Alkali- oder Erdalkalihydroxyde oder Carbonate, oder organische Basen wie Alkylamine, wie Methylamine, Ethylamine, iso-Octylamine oder Arylamine, wie Pyridin. Bevorzugt ist Ammoniak, sowie gegebenenfalls Lösungsmittel, wie aliphatische Alkohole, wie Methanol, Ethanol, n-Propanol, iso-Propanol, n-, iso-Butanol, oder Alkohol-/Wassergemische, Ether, wie Diethylether oder Tetrahydrofuran, Ketone, wie Methyl-isobutylketon, Kohlenwasserstoffe, wie n-Hexan, Cyclo-Hexan, Toluol oder Mineralöle.

### Mengenverhältnisse

100 Gewichtsteile Siliciumdioxid werden pro 100 m²/g ihrer spezifischen Oberfläche mit mindestens 5 Gewichtsteilen Wasser und 5 Gewichtsteilen Silyliermittel, bezogen auf je 100 g/Mol an Molekulargewicht des Silyliermittels, umgesetzt. Bevorzugt sind größer 10 Gewichtsteile Wasser bzw. 10 Gewichtsteile Silyliermittel bezogen auf je 100 g/Mol an Molekulargewicht des Silyliermittels. Bezogen auf das Silyliermittel sollten vorzugsweise mindestens 10 Mol%, bevorzugt 25 Mol%, besonders bevorzugt 50 Mol% Base während der Silylierung anwesend sein. Dies kann durch zusätzliche Zugabe von Base oder durch Abspaltung von Base aus dem Silyliermittel während oder in Vorreaktionen der Silylierreaktion geschehen. Mengenverhältnisse der sauerstoffhaltigen, siliciumorganischen Verbindungen zu Silyliermittel sind bevorzugt 10 Mol% bis 10facher Überschuß. Besonders bevorzugt sind 50 Mol% bis 250 Mol%.

### Reaktionsparameter

Die Reaktionszeit bei Raumtemperatur liegt bei mindestens 15 Min., bei höheren Temperaturen entsprechend kürzer, bei tieferen Temperaturen entsprechend höher. Die Reaktionstemperatur liegt höher als 0°C, bevorzugt bei Raumtemperatur, besonders bevorzugt bei höher als 40 °C, wobei sie unterhalb der Siedetemperatur der einzelnen Komponenten (oder ihrer Gemische) der Silylierung liegt. Bevorzugte Reaktionszeiten liegen bei größer oder gleich 1h bei T = 40°C, besonders bevorzugte Reaktionszeiten bei größer oder gleich 2h bei größer oder gleich T = 60°C. Der Reaktionsdruck beträgt bevorzugt Normaldruck bis 10 bar, besonders bevorzugt 1 bis 2 bar.

Das erfindungsgemäße Siliciumdioxid wird bevorzugt als Verdikkungsmittel und rheologisches Additiv in Flüssigkeiten, Polymeren oder Harzen zur Entwicklung von Strukturviskosität, Fließgrenze und Thixotropie verwendet.

Des weiteren wird das erfindungsgemäße Siliciumdioxid als Verdickungsmittel und rheologisches Additiv sowie als Verstärkerfüllstoff in Siliconkautschuken des Typs kondensationsvernetzend, wie z.B. kondensationsvernetzende 1-Komponenten- oder 2-Komponentensysteme, in Siliconkautschuken des Typs additionsvernetzend und in Siliconkautschuken des Typs peroxidisch vernetzend verwendet. Es kann auch als Rieselhilfsmittel in pulverförmigen Feststoffen, wie Feuerlöschpulvern und als Rieselhilfsmittel und als Ladungsregulativ in pulverförmigen Feststoffen, wie z.B. Trocken-Tonern, beispielweise 1-Komponenten- oder 2-Komponenten Tonern, verwendet werden. Darüber hinaus kann es in Antischaummitteln verwendet werden.

Vorteile des erfindungsgemäßen Siliciumdioxids sind verbesserte rheologische Eigenschaften der mit diesem Siliciumdioxid gefüllten Siliconkautschukmassen und verbesserte mechanische Eigenschaften der vernetzten Siliconelastomere, sowie eine verbesserte Transparenz der gefüllten Siliconelastomere und verbesserte Fließeigenschaften und verbesserte Ladungseigenschaften der mit diesem Siliciumdioxid vermischten Trockentoner. Des weiteren ist die Stabilität bei Tonern bei langen Belastungszeiten verbessert, das heißt auch, daß mit der gleichen Menge Toner mehr Kopien erhalten werden können, da das Siliciumdioxid besser auf der Toneroberfläche haftet.

### Beispiele

### Beispiel 1

100 g eines pyrogenen Siliciumdioxids mit einer spezifischen Oberfläche nach BET von 200 m²/g (käuflich erhältlich bei Wakker unter dem Namen HDK N20), 40 g Wasser, 40 g Hexamethyldisilazan und 20 g Hexamethyldisiloxan werden intensiv vermischt und anschließend für 24 h bei 60°C zur Reaktion gebracht. Das pulvrige Reaktionsgemisch wird anschließend bei 150°C während 2 h in einem schwachen Stickstoffstrom von überschüssigem Wasser, Ammoniak und flüchtigen Siliciumverbindungen gereinigt. Es wird ein weißes Pulver erhalten.

### Beispiel 2

100 g eines pyrogenen Siliciumdioxids mit einer spezifischen Oberfläche nach BET von 125 m²/g (käuflich erhältlich bei Wakker unter dem Namen HDK S13), 25 g Wasser, 25 g Hexamethyldisilazan und 12 g Hexamethyldisiloxan werden intensiv vermischt und anschließend für 24 h bei 60°C zur Reaktion gebracht. Das pulvrige Reaktionsgemisch wird anschließend bei 150°C während 2 h in einem schwachen Stickstoffstrom von überschüssigem Wasser, Ammoniak und flüchtigen Siliciumverbindungen gereinigt. Es wird ein weißes Pulver erhalten.

### Beispiel 3

100 g eines pyrogenen Siliciumdioxids mit einer spezifischen Oberfläche nach BET von 300 m²/g (käuflich erhältlich bei Wakker unter dem Namen HDK T30), 60 g Wasser, 60 g Hexamethyldisilazan und 30 g Hexamethyldisiloxan werden intensiv vermischt und anschließend für 24 h bei 60°C zur Reaktion gebracht. Das pulvrige Reaktionsgemisch wird anschließend bei 150°C während 2 h in einem schwachen Stickstoffstrom von überschüssigem Wasser, Ammoniak und flüchtigen Siliciumverbindungen gereinigt. Es wird ein weißes Pulver erhalten.

### Beispiel 4

100 g eines pyrogenen Siliciumdioxids mit einer spezifischen Oberfläche nach BET von 300 m²/g (käuflich erhältlich bei Wakker unter dem Namen HDK T30), 60 g Wasser, 120 g Bis-(3,3,3-Triflourpropyl-dimethyl)-Disilazan, und 30 g Hexamethyldisiloxan werden intensiv vermischt und anschließend für 24 h bei 60°C unter Rühren zur Reaktion gebracht. Das pulvrige Reaktionsgemisch wird anschließend bei 200°C während 2 h in einem schwachen Stickstoffstrom von überschüssigem Wasser, Ammoniak und flüchtigen Siliciumverbindungen gereinigt. Es wird ein weißes Pulver erhalten.

### Beispiel 5

100 g eines pyrogenen Siliciumdioxids mit einer spezifischen Oberfläche nach BET von 300 m²/g (käuflich erhältlich bei Wakker unter dem Namen HDK T30), 60 g Wasser, 35 g Bis-(Vinyldimethyl)-Disilazan, 35 g Hexamethyldisilazan und 30 g Hexamethyldisiloxan werden intensiv vermischt und anschließend für 24 h bei 60°C unter Rühren zur Reaktion gebracht. Das pulvrige Reaktionsgemisch wird anschließend bei 170°C während 2 h in einem schwachen Stickstoffstrom von überschüssigem Wasser, Ammoniak und flüchtigen Siliciumverbindungen gereinigt. Es wird ein weißes Pulver erhalten.

### Beispiel 6

100 g eines pyrogenen Siliciumdioxids mit einer spezifischen Oberfläche nach BET von 200 m²/g (käuflich erhältlich bei Wakker unter dem Namen HDK N20), 40 g Wasser und 40 g Hexamethyldisilazan werden intensiv vermischt und anschließend für 24 h bei 60°C zur Reaktion gebracht. Das pulvrige Reaktionsgemisch wird anschließend bei 150°C während 2 h in einem schwachen Stickstoffstrom von überschüssigem Wasser, Ammoniak und flüchtigen Siliciumverbindungen gereinigt. Es wird ein weißes Pulver erhalten.

### Beispiel 7

100 g eines pyrogenen Siliciumdioxids mit einer spezifischen Oberfläche nach BET von 200 m²/g (käuflich erhältlich bei Wakker unter dem Namen HDK N20) 40 g Wasser, 42 g Trimethylmethoxysilan und 14 g einer 25%igen Lösung von Ammoniak und Wasser werden intensiv vermischt und anschließend für 24 h bei 60 °C zur Reaktion gebracht. Das pulvrige Reaktionsgemisch wird anschließend bei 150 °C während 2 h in einem schwachen Stickstoffstrom von überschüssigem Wasser, Methanol, Ammoniak und flüchtigen Siliciumverbindungen gereinigt. Es wird ein weißes Pulver erhalten.

### Beispiel 8

### - nicht erfindungsgemäß -

100 g eines pyrogenen Siliciumdioxids mit einer spezifischen Oberfläche nach BET von 200 m²/g (käuflich erhältlich bei Wakker unter dem Namen HDK N20), 40 g Wasser, 40 g Hexamethyldisilazan und 20 g Hexamethyldisiloxan werden intensiv vermischt und anschließend für 5 Min. bei 40°C zur Reaktion gebracht.

Das pulvrige Reaktionsgemisch wird anschließend bei 150°C während 2 h in einem schwachen Stickstoffstrom von überschüssigem Wasser, Ammoniak und flüchtigen Siliciumverbindungen gereinigt. Es wird ein weißes Pulver erhalten.

### Beispiel 9

### - nicht erfindungsgemäß -

100 g eines pyrogenen Siliciumdioxids mit einer spezifischen Oberfläche nach BET von 200 m²/g (käuflich erhältlich bei Wakker unter dem Namen HDK N20), 40 g Wasser und 42 g Trimethylmethoxysilan werden intensiv vermischt und anschließend für 24 h bei 60 °C zur Reaktion gebracht. Das pulvrige Reaktionsgemisch wird anschließend bei 150°C während 2 h in einem schwachen Stickstoffstrom von überschüssigem Wasser, Methanol und flüchtigen Siliciumverbindungen gereinigt. Es wird ein weißes Pulver erhalten.

Zusammenfassung der analytischen Daten zu dem Siliciumdioxid gemäß den Beispielen 1 bis 9

**Tabelle 1**

| Beispiel | Silyliermittelreste*) pro nm² Siliciumdioxid-Oberfläche | Siliciumdioxid-Silanolgruppen pro nm² Siliciumdioxid-Oberfläche | Summe der Silyliermittelreste und Siliciumdioxid-Silanolgruppen pro nm² Siliciumdioxid-Oberfläche | Siliciumdioxid-Oberfläche in m²/g **) |
|---|---|---|---|---|
| HDK N20 | - | 1,9 | 1,9 | 200 |
| Beispiel 1 | 5,3 | 0,5 | 5,8 | 79 |
| HDK S13 | - | 1,8 | 1,8 | 125 |
| Beispiel 2 | 4,9 | 0,4 | 5,3 | 50 |
| HDK T30 | - | 1,9 | 1,9 | 300 |
| Beispiel 3 | 5,7 | 0,5 | 6,2 | 121 |
| Beispiel 4 | 4,2 | 0,4 | 4,6 | 129 |
| Beispiel 5 | 5,1 | 0,6 | 5,7 | 120 |
| Beispiel 6 | 3,6 | 0,6 | 4,2 | 109 |
| Beispiel 7 | 5,2 | 0,5 | 5,7 | 83 |
| Beispiel 8 | 1,4 | 0,5 | 1,9 | 129 |
| Beispiel 9 | 0,9 | 0,9 | 1,8 | 154 |

| | | | | |
|---|---|---|---|---|
| *) Silyliermittelrest in den Beispielen 1-9: Me₃Si- **) gemessen nach der BET-Methode nach DIN 66131 und 66132 | | | | |

### Beispiel 10

Je 50 g eines Ferrit-Carriers mit einem mittleren Partikeldurchmesser von 80 µm werden mit je 0,5 g der Siliciumdioxide aus den Beispielen 1 - 5 bei Raumtemperatur durch Schütteln in einem 100 ml-Polyethylen-Gefäß während 15 Min. vermischt. Vor der Messung werden diese Mischungen während 5 Min. bei 64 UpM in einem geschlossenen 100 ml-Polyethylen-Gefäß auf einem Rollenbock aktiviert. Mit einer "hard-blow-off cell" (ca. 3 g Siliciumdioxid, Kapazität 10 nF, 45 µm Sieb, Luftstrom 1 l/Min., Luftdruck 2,4 kPa, Meßzeit 90 sec.)(EPPING GmbH, D-85375 Neufahrn) wird das triboelektrische Aufladungsverhalten des Siliciumdioxids als Verhältnis von Siliciumdioxid-Ladung pro Siliciumdioxid-Masse (q/m) gemessen.

**Tabelle 2**

| Beispiel | Ladungsverhalten q/m gegen Ferrit [µC/g] |
|---|---|
| Beispiel 1 | - 420 |
| Beispiel 2 | - 380 |
| Beispiel 3 | - 430 |
| Beispiel 4 | - 290 |
| Beispiel 5 | - 360 |

### Beispiel 11

500 g eines Vinyl-endständigen Polydimethylsiloxan-Polymers mit einer Viskosität von 20.000 mm²/s bei 25°C werden in einem Laborkneter auf 150°C erhitzt. 400 g eines Siliciumdioxids nach Beispiel 3 werden zugefügt, anschließend wird durch Kneten gemischt. Unter Kneten werden während einer Stunde bei 150°C und 1000 hPa flüchtige Bestandteile entfernt. Es wird eine steife Phase erhalten, die anschließend durch weitere Zugabe von 400 g eines Vinyl-endständigen Polydimethylsiloxan-Polymers mit einer Viskosität von 20.000 mm²/s bei 25°C verdünnt wird. Aus dieser Grundmasse werden eine Komponente A und eine Komponente B hergestellt.

Herstellung der Komponente A: 380 g der Grundmasse, 0,2 g Platin als Komplex mit Bis-(vinyldimethyl)-disiloxan als Katalysator und 1 g Ethinylcyclohexanol als Inhibitor werden bei Raumtemperatur und p = 1000 hPa für 0,5 Stunden gemischt.

Herstellung der Komponente B: 380 g der Grundmasse, 18 g eines linearen Methyl-H-Polysiloxans mit einer Viskosität von 400 mm²/s bei 25°C und einem Si-H-Gehalt von 0,5 Mol% als Vernetzer und und 1 g Ethinylcyclohexanol als Inhibitor werden bei Raumtemperatur und p = 1000 hPa für 0,5 Stunden gemischt.

Zur Vernetzung werden die Komponenten A und B im Verhältnis 1 : 1 gemischt und bei einer Temperatur von 160°C vernetzt. Nach Vulkanisation und 4 Stunden Tempern bei 200°C werden die Shore-A-Härte, die Reißfestigkeit, die Reißdehnung und der Weiterreißwiderstand gemessen und die Transparenz beurteilt.

**Tabelle 3a**

| | |
|---|---|
| Viskosität der Grundmasse | 110 Pas |
| Beurteilung der Grundmasse | klar und transparent |

**Tabelle 3b**

| | |
|---|---|
| Shore-A-Härte | 30 |
| Reißfestigkeit | 9 N/mm² |
| Reißdehnung | 680% |
| Weiterreißwiderstand | 33 N/mm |
| Beurteilung | klar und transparent |

### Beispiel 12

100 g eines Siliciumdioxid-freien, magnetischen 1-Komponenten-Trockentoners, Typ negativ ladend, "crushed type", Basis Copolymer Styrol/Methacrylat, mit einer mittleren Partikelgröße von 14 µm (z.B. erhältlich bei der Firma IMEX, Japan) werden mit 0,4 g eines Siliciumdioxids nach Beispiel 2 in einem Taumelmischer (z.B. Turbular) während 1 Stunde bei Raumtemperatur gemischt. Nach einer Belastungszeit des Toners von 20 Min. (entsprechend der Belastung nach 1000 Kopiervorgängen) werden die Aufladung (Ladung pro Masse) des fertigen Siliciumdioxid-haltigen Toners und das Fließverhalten (Massenfluß) des fertigen Siliciumdioxid-haltigen Toners zur Entwicklungswalze in einem "q/m-Mono"-Elektrometer/Flowtester (EPPING GmbH, D-85375 Neufahrn) bestimmt.

**Tabelle 4**

| Beispiel | Tonerladung [µC/g] | Fließverhalten [mg] |
|---|---|---|
| Siliciumdioxid-freier Toner | - 1,50 | 2 |
| Beispiel 1 | - 1,71 | 36 |
| Beispiel 2 | - 1,65 | 33 |
| Beispiel 3 | - 1,89 | 38 |
| Beispiel 4 | - 1,75 | 45 |
| Beispiel 5 | - 1,73 | 42 |

## Patentansprüche

1. Siliciumdioxid, das an seiner Oberfläche teil- oder vollständig silylierte Polykieselsäureketten aus Einheiten der Struktur
Rₐ(OH)_{b}SiO_{c} und (OH)_{d}SiOₑ
wobei R gleich oder verschieden sein kann und ein substituierter oder nicht substituierter Kohlenwasserstoffrest ist,
a 1, 2 oder 3 ist,
sowie b 0, 1 oder 2 ist
und c 1, 2 oder 3 ist,
wobei a + b + c gleich 4 ist,
d 0, 1, 2 oder 3 ist,
e 1, 2, 3 oder 4 ist
und d + e gleich 4 ist.
trägt, wobei die Summe aus Silanolgruppen der Siliciumdioxid-Oberfläche (SiOH) und aufgepfropften Silyliermittelresten (SiRₐ) größer ist als die Zahl der Silanolgruppen auf der Oberfläche von unbehandeltem Siliciumdioxid, wobei a 1, 2 oder 3 sein kann und R gleich oder verschieden sein kann und ein substituierter oder nicht substituierter Kohlenwasserstoffrest ist.

2. Siliciumdioxid nach Anspruch 1, **dadurch gekennzeichnet, daß** der molare Anteil der an der Siliciumdioxid-Oberfläche gebundenen, teil- oder vollständig silylierten Polykieselsäurestrukturen aus Einheiten der Struktur
Rₐ(OH)_{b}SiO_{c}
in der gesamten Silyliermittelschicht kleiner oder gleich 75 Mol%, aber größer oder gleich 25 Mol% ist, wobei R, a, b und c die oben angegebene Bedeutung haben.

3. Siliciumdioxid nach einem oder mehreren der Ansprüche 1 bis 2, **dadurch gekennzeichnet, daß** das Siliciumdioxid einen Gehalt an aktiven und sauren SiOH der SiO₂-Oberfläche des Siliciumdioxids von kleiner als 25 Mol%, bezogen auf den Gesamtgehalt an aktiven und sauren SiOH eines unbehandelten hydrophilen Siliciumdioxids, aufweist.

4. Verfahren zur Herstellung von Siliciumdioxid nach Anspruch 1 das an seiner Oberfläche teil- oder vollständig silylierte Polykieselsäureketten trägt, **dadurch gekennzeichnet, daß** das Silyliermittel im molaren Überschuß, bezogen auf die vorhandenen Silanolgruppen des Siliciumdioxids, zugegeben wird, wobei Wasser dabei mindestens in gleichen molaren Mengen wie das Silyliermittel vorliegt, wobei die Silylierung unter Einwirkung von Basen erfolgt, wobei die Silylierung bei Temperaturen größer oder gleich 60 °C erfolgt und die Reaktionszeit der Silylierung bei größer oder gleich 2 Stunden liegt.

5. Verfahren zur Herstellung von Siliciumdioxid nach Anspruch 4, **dadurch gekennzeichnet, daß** zusätzlich sauerstoffhaltige, siliciumorganische Verbindungen zur Silylierung zugefügt werden.

6. Verfahren zur Herstellung von Siliciumdioxid nach Anspruch 5, **dadurch gekennzeichnet, daß** die zusätzlichen sauerstoffhaltigen, siliciumorganischen Verbindungen selbst mit einem molaren Anteil von kleiner als 25% umgesetzt werden.

7. Toner, **dadurch gekennzeichnet, daß** er das Siliciumdioxid nach den Ansprüchen 1 - 3 oder hergestellt nach den Ansprüchen 4 bis 5 enthält.

8. Vernetzbare Siliconmasse und Siliconelastomer, **dadurch gekennzeichnet, daß** sie Siliciumdioxid nach einem der Ansprüche 1 bis 3, hergestellt nach einem der Ansprüche 4 bis 6, enthalten.

## Claims

1. Silicon dioxide which bears partially or fully silylated polysilicic acid chains comprising units of the structure
Rₐ(OH)_{b}SiO_{c} and (OH)_{d}SiOₑ,
where R can be identical or different
and are each a substituted or unsubstituted hydrocarbon radical,
a is 1, 2 or 3,
b is 0,1 or 2
and c is 1, 2 or 3,
where a + b + c is 4,
d is 0,1, 2 or 3,
e is 1, 2, 3 or 4
and d + e is 4, on its surface, wherein the sum of silanol groups of the silicon dioxide surface (SiOH) and grafted-on silylating agent radicals (SiRₐ) is greater than the number of silanol groups on the surface of untreated silicon dioxide, where a can be 1, 2 or 3 and R can be identical or different and are each a substituted or unsubstituted hydrocarbon radical.

2. Silicon dioxide according to Claim 1, **characterized in that** the molar proportion of the partially or fully silylated polysilicic acid structures bound to the silicon dioxide surface and comprising units of the structure
Rₐ(OH)_{b}SiO_{c}
in the total silylating agent layer is less than or equal to 75 mol%, but greater than or equal to 25 mol%, where R, a, b and c are as defined above.

3. Silicon dioxide according to one or more of Claims 1 to 2, **characterized in that** the silicon dioxide has a content of active and acid SiOH on the SiO₂ surface of the silicon dioxide of less than 25 mol%, based on the total content of active and acid SiOH of an untreated hydrophilic silicon dioxide.

4. Process for preparing silicon dioxide according to Claim 1 which bears partially or fully silylated polysilicic acid chains on its surface, **characterized in that** the silylating agent is added in a molar excess, based on the silanol groups present on the silicon dioxide, where water is present in at least the same molar amounts as the silylating agent, the silylation is carried out in the presence of bases, the silylation is carried out at temperatures of greater than or equal to 60°C and the reaction time of the silylation is greater than or equal to 2 hours.

5. Process for preparing silicon dioxide according to Claim 4, **characterized in that** oxygen-containing organosilicon compounds are additionally added to the silylation.

6. Process for preparing silicon dioxide according to Claim 5, **characterized in that** the additional oxygen-containing organosilicon compounds are themselves reacted in a molar proportion of less than 25%.

7. Toner **characterized in that** it comprises the silicon dioxide according to any of Claims 1-3 or prepared according to any of Claims 4 to 6.

8. Crosslinkable silicone composition and silicone elastomer, **characterized in that** they comprise silicon dioxide according to any of Claims 1 to 3, prepared according to any of Claims 4 to 6.

## Revendications

1. Dioxyde de silicium, qui porte sur sa surface des chaînes d'acide polysilicique partiellement ou complètement silylées constituées des unités de structure
Rₐ(OH)_{b}SiO_{c} et (OH)_{d}SiOₑ,
R pouvant être identique ou différent et représentant un radical hydrocarboné substitué ou non substitué,
a représentant 1, 2 ou 3,
ainsi que b représentant 0, 1 ou 2
et c représentant 1, 2 ou 3,
a + b + c étant égal à 4,
d représentant 0, 1, 2 ou 3,
e représentant 1, 2, 3 ou 4
et d + e étant égal à 4,
la somme des groupements silanol à la surface du dioxyde de silicium (SiOH) et des radicaux greffés d'agent de silylation (SiRₐ) étant supérieure au nombre de groupements silanol sur la surface du dioxyde de silicium non traité, a pouvant être égal à 1, 2 ou 3 et R pouvant être identique ou différent et représentant un radical hydrocarboné substitué ou non substitué.

2. Dioxyde de silicium selon la revendication 1, **caractérisé en ce que** la proportion molaire des structures d'acide polysilicique complètement ou partiellement silylées, 1 fixées sur la surface de dioxyde de silicium, constituées d'unités de structure
Rₐ(OH)_{b}SiO_{c}
est dans la totalité de la couche d'agent de silylation inférieure ou égale à 75% en mole, mais supérieure ou égale à 25% en mole, R, a, b et c ayant la signification susmentionnée.

3. Dioxyde de silicium selon l'une ou plusieurs des revendications 1 à 2, **caractérisé en ce que** le dioxyde de silicium présente une teneur en SiOH actif et acide à la surface de SiO₂ du dioxyde de silicium inférieure à 25% en mole par rapport à la teneur totale en SiOH actif et acide d'un dioxyde de silicium hydrophile non traité.

4. Procédé pour la préparation de dioxyde de silicium selon la revendication 1, qui porte sur sa surface des chaînes d'acide polysilicique complètement ou partiellement silylées, **caractérisé en ce que** l'agent de silylation est ajouté en excès molaire par rapport aux groupements silanol présents sur le dioxyde de silicium, l'eau étant en l'occurrence au moins présente en des quantités molaires identiques à l'agent de silylation, la silylation étant réalisée sous l'action de bases, la silylation étant réalisée à des températures supérieures ou égales à 60°C et le temps de réaction de la silylation étant supérieur ou égal à 2 heures.

5. Procédé pour la préparation de dioxyde de silicium selon la revendication 4, **caractérisé en ce qu'**on ajoute en outre à la silylation des composés organosiliciés contenant de l'oxygène.

6. Procédé pour la préparation de dioxyde de silicium selon la revendication 5, **caractérisé en ce qu'**on transforme les composés mêmes organosiliciés supplémentaires, contenant de l'oxygène, avec une proportion molaire inférieure à 25%.

7. Toner, **caractérisé en ce qu'**il contient le dioxyde de silicium selon les revendications 1 à 3 ou préparé selon les revendications 4 à 6.

8. Masse de silicone et élastomère de silicone réticulables, **caractérisés en ce qu'**ils contiennent du dioxyde de silicium selon l'une quelconque des revendications 1 à 3, préparé selon l'une quelconque des revendications 4 à 6.
